# EUROPÄISCHE PATENTANMELDUNG

(11) **EP 3 363 772 A1**
(43) Veröffentlichungstag der Anmeldung: **22.08.2018**
(21) Anmeldenummer: 17156526.0
(22) Anmeldetag: 16.02.2017
(51) Int. Cl.: C03C 13/00, C03C 25/66, B32B 5/26

(54) **OBERFLÄCHENMODIFIZIERTE GLASFASER MIT BI-KOMPONENTEN KERN-MANTEL-STRUKTUR**

(71) Anmelder: ISOLITE GmbH, 67063 Ludwigshafen (DE)
(72) Erfinder: KNOLL, Michael, 69488 Birkenau (DE); PICO, Davide, 52062 Aachen (DE)
(74) Vertreter: Grünecker Patent- und Rechtsanwälte PartG mbB

(57) **Zusammenfassung**

Oberflächenmodifizierte Glasfaser, umfassend: einen Kern aus einem ersten Glasfasermaterial; eine Oberflächenschicht, die den Kern mantelartig vollständig umschließt; wobei die Oberflächenschicht im Vergleich zum Kern einen höheren Siliziumdioxid-Anteil und eine höhere Porosität aufweist.

Die Erfindung betrifft auch ein Verfahren zur Herstellung einer oberflächenmodifizierten Glasfaserstruktur, wobei die Glasfaserstruktur eine Precursor-Faser oder ein Faservliesschicht aus vernadelten Precursorfasern ist, wobei die Glasfaserstruktur aus einem ersten Glasfasermaterial ist, das E-Glas, Wasserglas oder A-Glas umfasst, umfassend die Schritte:Auslaugen der Glasfaserstruktur durch Behandeln mit, insbesondere Eintauchen in, einer/eine vordefinierte/n Säurelösung für eine vorbestimmte Zeit bei einer vorbestimmten Raumtemperatur und bei einer vordefinierten Säurekonzentration.

## Beschreibung

### Gebiet der Erfindung

Die Erfindung betrifft eine oberflächenmodifizierte Glasfaser mit einer zweikomponentigen Kern-Mantelstruktur, sowie ein Verfahren zur Herstellung einer derartigen Faser.

### Stand der Technik

Verschiedene Fasertypen sind im Bereich der akustischen und thermischen Isolierung bekannt. Einige Beispiele sind nachfolgend erörtert.

### Glasfasern

Glasfasern sind anorganische Fasern mit einer amorphen Struktur und ohne Molekülorientierung. Aufgrund ihrer Struktur haben sie isotrope Eigenschaften. Durch die kovalente Bindung zwischen Silizium und Sauerstoff haben sie eine hohe Festigkeit. Je nach ihrer Zusammensetzung sind die Glasfasern in unterschiedlichen Arten aufgeteilt. Zum Beispiel E-Glas, R-Glas, S-2-Glas, C-Glas, D-Glas und AR-Glas um einige zu nennen. Jede dieser Glasarten zeichnet sich durch besondere Eigenschaften aus. E-Glasfasern sind typischerweise die billigsten Faserarten und sind auch die am weitesten verbreite Glasfaserart, etwa 90 % Marktanteil. Die Jahresproduktion weltweit liegt bei ca. 5.000.000 t. Die Zugfestigkeit einer E-Glasfaser beträgt ca. 3,4 GPa und der Elastizitätsmodul, E-Modul, ca. 75 GPa.

### Silikatfasern

Silikatfasern sind amorphe Fasern. Ihr Hauptbestandteil ist Siliziumdioxid, SiO₂. Sie werden über zwei unterschiedliche Prozesse (Sol-Gel-Trocken-Verfahren oder Auslaugung) hergestellt; das Sol-Gel-Verfahren, ist ein Trockenspinn-Prozess bei dem Fasern aus einem Gel in Filamenten direkt gesponnen und getrocknet werden. Das Gel wird am meisten durch eine Polymerisierung von Organosilanen (z.B. TEOS) gewonnen. Silikatfasern werden aus Auslaugungsverfahren aus Glasfaserprekursoren gewonnen. Der SiO₂ Anteil wird von 52 % und 70 % der Glasfaserprekursoren bis über 93 % am Ende des Prozesses über Auslaugung der anderen Oxiden des Glases steigen. Sie werden mit den unterschiedlichsten Eigenschaften auf dem Markt angeboten. Die kostengünstigen Fasern liegen bei weniger 10 €/kg. Silikatfasern haben eine sehr niedrige Festigkeit und werden in Temperaturbereichen bis maximal 1000 °C genutzt. Silikatfasern haben einen höheren SiO₂-Gehalt als Glasfasern und eine amorphe Struktur. Sie bestehen mindestens aus 93 % SiO₂ und haben deswegen eine hohe Wärmebeständigkeit bis zu 1.050 °C. Im Vergleich zu anderen Fasern, wie z.B. Keramikfasern, Basaltfasern, Quarzfasern, Glasfasern, u.a. anorganische Fasern haben Silikatfasern mit ca. 0,35 GPa eine geringere Zugfestigkeit.

### Keramikfasern

Bei Keramikfasern handelt es sich um Fasern aus polykristallinen, anorganischen Werkstoffen. Ihre thermische Beständigkeit reicht bis zu 1600 °C. Die keramischen Fasern werden in oxidische und nicht-oxidische Gruppen eingeteilt. Die oxidischen Fasern haben Aluminiumoxid als Hauptbestandteil. Als Zusatzstoffe kommen SiO₂ oder ZrO₂ zum Einsatz. Bei den nicht-oxidischen Fasern ist Siliziumkarbid der Basiswerkstoff. Die Zusatzstoffe sind Sauerstoff, Titan, Zirkonium und Aluminium. Während der E-Modul von Oxidfasern zwischen 150 GPa und 370 GPa liegt, ist der E-Modul bei Nichtoxidfasern zwischen 180 GPa und 420 GPa. Die Zugfestigkeit liegt bei Oxidfasern zwischen 1,7 und 3,5 GPa und bei Nichtoxidfasern zwischen 2,5 GPa und 4,0 GPa. Keramikfasern sind zwar bis 1600 °C stabil, dabei aber sehr teuer. Zudem werden sie nicht bei Temperaturen unter 1000 °C eingesetzt, wenn es sich um geringe thermische und mechanische Beanspruchung handelt. Weiter sind diese Fasern als gesundheitsschädlich anzusehen, und stehen auf der Kandidatenliste zur Aufnahme in den Anhang XIV (zulassungspflichtige Stoffe) der EU-Chemikalienverordnung REACH (Verordnung: Registration , Evaluation , Authorisation and Restriction of Chemicals).

### Basaltfasern

Basaltfasern bestehen aus dünnen Fasern aus Basaltgestein. Basaltfasern werden aus einer flüssigen Basaltschmelze bei etwa 1400 (+/- 50) °C hergestellt. Ihre Bestandteile sind SiO₂, Al₂O₃, CaO, MgO, und weiteren Oxide. Die Basaltfasern haben eine gute chemische Beständigkeit und eine Zugfestigkeit von 3,7 GPa, bei einem E-Modul von 90 - 110 GPa. Die Temperaturbeständigkeit liegt ca. bei 700 °C. Der Preis dieser Fasern liegt zwischen 2,5 und 4 €/kg.

### Quarzfasern

Quarzfasern bestehen aus 99,99 % amorphem SiO₂. Sie sind temperaturbeständiger und säurebeständiger als Silikatfasern. Sie haben eine Zugfestigkeit von 3,2 - 3,6 GPa und einen E-Modul von 76 - 78 GPa. Ihr Preis (800 € pro kg) liegt deutlich höher als der der Silikatfaser. Die Dauertemperaturbeständigkeit liegt bei ca. 1200 °C.

Üblicherweise werden Faserarten in Abhängigkeit der gewünschten Temperaturstabilität ausgewählt bzw. hergestellt, wobei typischerweise bei Temperaturen von bis zu 600 °C E-Glasfasern gewählt werden, darüber hinaus bei Temperaturen bis zu 750 °C ECR-Glasfasern, bei Temperaturen von bis zu 1000 °C Silikatfasern sowie darüber hinaus bei Temperaturen von bis zu 1600 °C Keramikfasern.

### Nachteile im Stand der Technik

Die genannten Faserarten haben jedoch vielfältig Nachteile. Diese können sich aus den generellen Umwelteigenschaften der Fasern ergeben, aus den Umständen der Verarbeitung und auch aus wirtschaftlichen Aspekten.

Keramikfasern sind kristallin, daher nicht biologisch abbaubar und somit potentiell gesundheitsschädlich, wenn nicht gar krebserzeugend.

Silikatfasern bzw. Ouarzfasern können durch Schmelzspinnen hergestellt werden. Dabei benötigt jedes einzelne Filament einen fehlerfreien Stab aus hochreinem SiO₂, welcher keine Blasen und keine Kristallzentren etc. aufweist. Die einzelnen Stäbe müssen direkt beheizt werden. Deswegen ist der Prozess extrem teuer und aufwendig. Diese Fasern werden nur für Radom und optische Lichtübertragung verwendet.

Beim Trockenspinnen von Silikatfasern/Sol-Gel kommt gesundheitsschädliches Tetraethylorthosilikat, TEOS, zum Einsatz. Zudem muss eine Polykondensation kontrolliert ablaufen. Das Verfahren ist aufwendig und durch die verwendeten Chemikalien sehr teuer. Der Preis liegt deutlich über 10 €/kg. Die erzielten Fasern weisen durchschnittliche mechanische Eigenschaften auf.

Silikatfasern aus Auslaugungsverfahren werden aus Glasfaserprekursoren gewonnen. Die Glasfasern enthalten am Anfang ein SiO₂ Gewichtsprozent zwischen 52 % und 70% und am Ende des Prozesses ist deren SiO₂ Anteil über 93 %. Die Fasern verlieren einen großen Teil ihrer ursprünglichen Festigkeit (von 3,4 GPa zu ca. 0,35 GPa) und im Verhältnis zu ihren Eigenschaften ist der Preis sehr hoch (über 10 €/kg).

### Aufgabe der Erfindung

Angesichts der oben diskutierten Probleme im Stand der Technik ist es die Aufgabe dieser Erfindung, als Alternative zu den geschilderten Fasern ein Faserprodukt und ein Verfahren zu dessen Herstellung bereitzustellen, dessen thermische Beständigkeit zwischen 700-1000 °C einstellbar ist und dabei bessere mechanische Eigenschaften hat, als vergleichbare auf dem Markt angebotene Faserprodukte. Dabei soll ein einfacherer Herstellungsprozess ermöglicht werden und beschriebene Nachteile aus dem bestehenden Stand der Technik auf ein Minimum reduziert werden. Des Weiteren sollen auch die Herstellungspreise solcher Isolationen deutlich herabsetzt sein.

### Beschreibung der Erfindung

Die Erfindung stellt eine oberflächenmodifizierte Glasfaser bereit, die oberflächenmodifizierte Glasfaser umfassend: einen Kern aus einem ersten Glasfasermaterial; eine Oberflächenschicht, die den Kern mantelartig vollständig umschließt; wobei die Oberflächenschicht im Vergleich zum Kern einen höheren Siliziumdioxid-Anteil und eine höhere Porosität aufweist.

Dabei kann das erste Glasfasermaterial des Kerns E-Glas, Wasserglas oder A-Glas umfassen.

Der Kern kann einen Siliziumdioxid-Anteil von ca. 52 % aufweisen.

Die Oberflächenschicht kann einen Siliziumdioxid-Anteil von maximal 96 % aufweisen.

Dabei kann der Kern einen Kerndurchmesser von mindestens 0,5 µm aufweisen und die Oberflächenschicht ebenfalls mindestens 0,5 µm dick sein.

Die Erfindung stellt ein Verfahren zur Herstellung einer oberflächenmodifizierten Glasfaserstruktur bereit, wobei die Glasfaserstruktur eine Precursor-Faser oder ein Faservliesschicht aus vernadelten Precursorfasern ist, wobei die Glasfaserstruktur aus einem ersten Glasfasermaterial ist, das E-Glas, Wasserglas oder A-Glas umfasst, umfassend die Schritte: Auslaugen der Glasfaserstruktur durch Behandeln mit, insbesondere Eintauchen in, einer/eine vordefinierte/n Säurelösung für eine vorbestimmte Zeit bei einer vorbestimmten Raumtemperatur und bei einer vordefinierten Säurekonzentration.

Es versteht sich, dass die oberflächenmodifizierte Glasfaserstruktur aus der unbehandelten Glasfaserstruktur, nämlich einer Precursor-Faser oder einer Faservliesschicht, durch das Verfahren hervorgeht. Somit sind die Precursor-Faser beziehungsweise die Faservliesschicht aus vernadelten Precursorfasern jeweils die Ausgangelemente für das Verfahren.

Die Ausgangselemente für das Verfahren, die Precursor-Faser oder die Faservliesschicht /Faservliesmatte aus Precursor-Faser werden im Rahmen des Verfahrens weitestgehend gleichartig behandelt, so dass die Beschreibung der folgenden Schritte sowohl auf eine Precursor-Faser als auch auf eine Vielzahl von Precursor-Fasern, die bereits vorab zu einer Faservliesschicht vernadelt wurden, zutrifft. Als Precursor-Faser bzw. Precursor-Fasern können kommerzielle Fasern, beispielsweise die weit verbreiteten und kostengünstigen E-Glasfasern verwendet werden, aber auch die selteneren Wasserglas- oder A-Glasfasern. Im Rahmen des Verfahrens wird die Oberfläche der Precursor-Faser, also der Ausgangsfaser, bzw. der Precursor-Fasern der Faservliesschicht durch unvollständige Auslaugung modifiziert. Die Oberflächenschicht, kurz die Oberfläche, der durch das Verfahren erhaltenen oberflächenmodifizierten Faser besteht zu großen Teilen aus Siliziumdioxid, SiO₂. Die unvollständige Auslaugung lässtt jedoch den Kern oder den inneren Bereich der Precursor-Faser unverändert, so dass dieser im Wesentlichen aus dem unausgelaugten/unbehandelten ursprünglichen Ausgangsmaterial besteht, also beispielsweise aus nicht verändertem E-Glasfasermaterial, oder nicht verändertem Wasserglas- oder A-Glasfasermaterial. Die so entstandene oberflächenmodifizierte Faser kann auch als zweikomponentige Faser, Zweikomponenten-Faser oder Bi-Komponentenfaser bezeichnet werden, wobei der Kern die erste, innere Komponente darstellt und die modifizierte, mantelartige Oberflächenschicht, die den Kern vollständig umgibt, die zweite, äußere Komponente.

Der Kern der Fasern wird in dem oben beschriebenen Verfahren nicht ausgelaugt. Die resultierenden oberflächenmodifizerten Glasfasern haben dadurch bessere mechanische Eigenschaften. Ferner bleibt der Kern der Fasern ohne Auslaugung kompakt und er wird nicht porös werden. Dadurch ergibt sich eine erhebliche Eindämmung von Schrumpfung bei Temperaturbeaufschlagung der resultierenden Zweikomponenten-Faser.

Umgekehrt wird die den Kern vollständig umgebende, modifizierte Oberflächenschicht, die auch als Mantelschicht oder Mantel bezeichnet werden kann, im Vergleich zum Kern stark ausgelaugt. In dieser Schicht wird der Anteil an SiO₂ erheblich sein. Dabei wird die modifizierte Oberflächenschicht durch die Auslaugung porös. Diese Poren der modifizierten Oberflächenschicht schließen sich nur unter thermischer Belastung und garantieren dem Kern somit einen thermischen Schutz.

Ein weiterer Vorteil der oberflächenmodifizerten Glasfasern ist, dass die Glasübergangstemperatur für diese Fasern gegenüber dem Ausgangsmaterial erhöht wird, da thermisch niederbeständige Oxide bei der Auslaugung aus der Mantelschicht entfernt werden. D.h. bestimmte Oxide, welche die thermische Beständigkeit oder die Glasübergangstemperatur der Faser herabsetzen, können somit aus der Mantelschicht entfernt werden. Beispiele sind B₂O₃, CaO, MgO, K₂O, Na₂O, u.a.

In dem Verfahren kann die vordefinierte Säurelösung eine wässrige Lösung von Ameisensäure oder Salzsäure oder Schwefelsäure umfassen.

Generell können für die Auslaugung Säuren verwendet werden, denen SiO₂ gegenüber chemisch beständig ist, beispielsweise auch Oxalsäure, Salpetersäure, Phosphorsäure, Essigsäure. Die Auslaugung entsprechend dem gewünschten Auslaugungsgrad erhöht so den SiO₂-Anteil auf einen Wert von 52 % bis circa 96%.

Die Parameter des Verfahrens sind auf die gewünschte Faserart des Ausgangsmaterials und den gewünschten Grad der Auslaugung einstellbar. Insbesondere kann in dem Verfahren die Temperatur der Säurelösung zwischen Raumtemperatur und 100 °C betragen. Mit Hilfe von Reflux können auch noch höhere Temperaturen erreicht werden. Wasser würde dann verdampfen und wieder kondensieren. Konzentrationsgradienten von H₂SO₄ würden in einer Auslaugungswanne stattfinden. Dabei kann in dem Verfahren die Reaktionszeit für die Auslaugung, also die vorbestimmte Zeit zwischen 3 min - 3 h betragen. Ebenso kann in dem Verfahren die Säurekonzentration der Säurelösung zwischen 0,5 molar und 6 molar, insbesondere zwischen 1 molar und 3 molar betragen.

Des Weiteren ist ein Auslaugen von Rollenware im vernadelten Verbund ohne Verwendung einer Schlichte möglich. Insbesondere für ein Faservlies ist es ferner vorteilhaft, dass nicht einzelne Fasern ausgelaugt werden, bevor sie zu einem Faservlies verbunden werden, sondern es wird direkt das Faservlies ausgelaugt, das sich vor der Auslaugung bereits in Form und Herstellungszustand nahe dem gewünschten Endprodukt anlehnen kann.

Es wird ebenso ein Verfahren zur Herstellung eines Faservliesverbundes bereitgestellt, umfassend: Herstellen einer ersten Faservliesschicht wie oben beschrieben und Aufbringen einer zweiten Faservliesschicht aus einem zweiten Glasfasermaterial auf die erste Faservliesschicht, wobei das zweite Glasfasermaterial E-Glas, Wasserglas oder A-Glas umfasst.

Es ergibt sich somit ein wenigstens partiell behandelter Faservliesverbund aus wenigstens zwei Faservliesschichten/Vliesmatte. Von diesen ist die eine Faservliesschicht vorher ausgelaugt worden, die andere ist unbehandelt.

Ferner kann das Verfahren zur Herstellung eines Faservliesverbundes umfassen: Aufbringen einer dritten Faservliesschicht auf die erste Faservliesschicht derart, dass die zweite Faservliesschicht und die dritte Faservliesschicht die erste Faservliesschicht sandwichartig umschließen, wobei die dritte Faservliesschicht gleich der zweiten Faservliesschicht ist.

Es ergibt sich dabei eine Einsparung von Herstellungsschritten bei der Hochtemperaturfaservliesherstellung. Der Faservliesverbund kann eine Kern- und Mantelschicht- Struktur aufweisen und dabei entweder sandwichartig aus beispielsweise drei Schichten aufgebaut sein: Zweikomponentenfaservliesschicht/Vliesmatte aus kommerzieller Faser/Zweikomponentenfaservliesschicht oder auch nur bis zur Hälfte der Dicke mit Zweikomponentenasern ausgestattet sein, jeweils durch gezieltes Auslaugen.

### Kurzbeschreibung der Figuren

- Fig. 1: Schematische Darstellung oberflächenmodifizierte Faser
- Fig. 2: Ausgelaugte oberflächenmodifzierte E-Glasfasern und schematische Darstellung einer oberflächenmodifizierten Faser aus Fig. 1.
- Fig. 3: Schematische Ansicht von Faservliesverbund mit oberflächenmodifizierten Fasern in Sandwichstruktur.
- Fig. 4: Schematische Ansicht Faservliesverbund mit oberflächenmodifizierten Fasern.

### Detaillierte Beschreibung

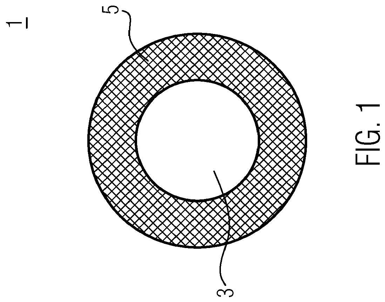

Fig. 1 zeigt eine schematische Darstellung einer oberflächenmodifizierten Faser 1 gemäß der vorliegenden Erfindung. Ausgehend von einer Precursor Glasfaserstruktur, hier einer Glasfaser, beispielsweise einer E-Glasfaser oder einer Wasserglasfaser oder einer A-Glasfaser ist durch unvollständige Auslaugung eine oberflächenmodifizierte Faser 1 entstanden. Dabei umfasst die oberflächenmodifizierte Faser 1 zwei Komponenten, nämlich eine modifizierte Oberflächenschicht 5 und einen im Wesentlichen - gegenüber der unbehandelten, nicht ausgelaugten Ausgangsfaser - unveränderten Kern 3. Es wird dabei eine unvollständige Auslaugung der Fasern durchgeführt. Hierdurch wird ein Auslaugungsgradient zwischen der Oberflächenschicht der Fasern 5, die stark ausgelaugt ist, und deren Kern 3, der nicht ausgelaugt ist, erreicht.

Die Glasfasern werden zwecks Auslaugung mit einer Säurelösung behandelt, üblicherweise eingetaucht. Hierzu kann Ameisensäure, Salzsäure oder Schwefelsäure jeweils in wässriger Lösung verwendet werden.

Die Precursor-Glasfasern werden definiert in die gewählte Säurelösung eingetaucht. Die Temperatur der Säurelösung kann dabei geeignet zwischen Raumtemperatur und 100 °C eingestellt werden. Die Reaktionszeit kann dabei ferner zwischen 3 Minuten und 3 Stunden variiert werden. Über die Temperatur, Art der Säure, Säurekonzentration, beispielsweise zwischen 1 molar und 3 molar, und die Reaktionszeit wird die Intensität der Auslaugung geregelt. Ziel der Auslaugung ist es, wie bereits angedeutet, einen Siliziumdioxid-Gradienten zwischen dem Kern und der Mantelschicht zu erreichen. Der maximale Gradient zwischen Kern und Mantelschicht kann höchstens 42 %+- 3% betragen da die Grundfaser einen SiO₂ Anteil von 52 % aufweist und die maximal ausgelaugte Faser einen SiO₂ Anteil von ca. 96 %.

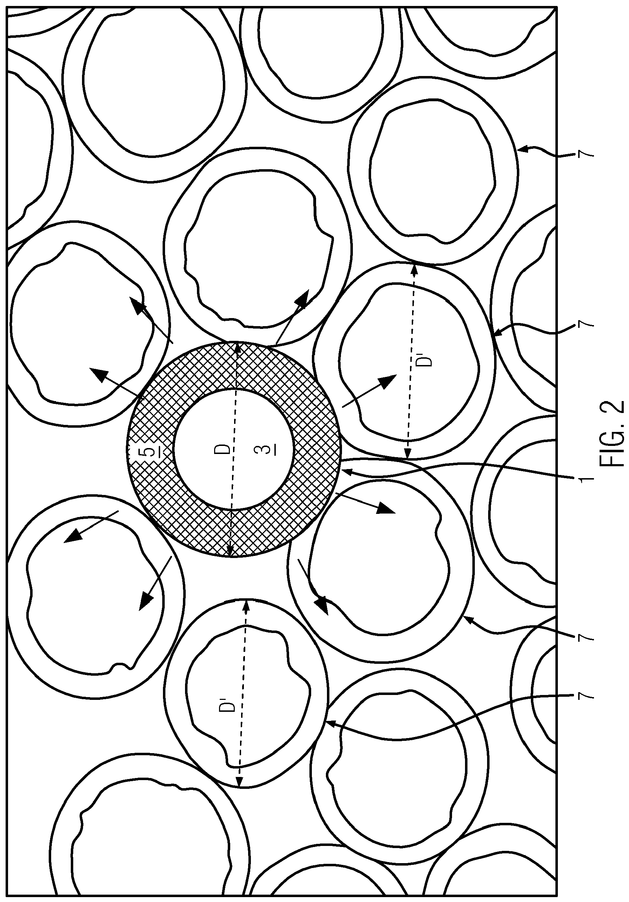

Fig. 2 illustriert ein Beispiel einer Kern-Mantel Struktur von Fasern gemäß der vorliegend Erfindung. Fig. 2 illustriert eine Vielzahl von E-Glasfasern, die einer unvollständigen, also partiellen Auslaugung ausgesetzt worden sind, also in eine Säurelösung definiert eingetaucht worden sind. Typische Werte sind etwa eine Temperatur von 50 °C, eine drei molare H₂SO₄ über einen Zeitraum von 24 Stunden. Die E-Glasfasern sind mit dem Bezugszeichen 7 bezeichnet. Unterschiede zwischen den einzelnen behandelten Fasern 7 werden hier nicht betrachtet. Im Mittel sind die einzelnen behandelten Fasern 7 als gleich zu betrachten. Die einzelnen behandelten, also oberflächenmodifizierten Fasern 7 haben einen mittleren Durchmesser D' von 9 µm. Zur Erläuterung ist in Fig. 2 in der Mitte der Figur zusätzlich die in Fig. 1 skizzierte Faser 1 mit ihrem Kern 3 und ihrer Mantelschicht 5 eingezeichnet. Die Faser 1 weist eine Durchmesser D auf, der dem mittleren Durchmesser D' der photographisch gezeigten, behandelten Fasern 7 entspricht. Deutlich zu sehen ist auf der photographischen Darstellung der Fasern 7 die Unterscheidung der beiden Komponenten der behandelten Fasern, nämlich des Kerns und der jeweiligen Mantelschicht, also der Bereich, in dem die Auslaugung des Ausgangsmaterials erfolgt ist.

Die Mantelschicht 5 weist einen erhöhten Siliziumoxid-Anteil und zugleich eine höhere Porosität auf, während der Kern 3 die ursprünglichen Eigenschaften der Precursorfaser 1 beibehält. Dabei wird der Kern 3 durch eine kompakte und nicht-poröse Struktur charakterisiert. Die Porosität der Faser verhält sich äquivalent zu deren Gewichtsverlust durch den Auslaugprozess.

Somit entspricht die Porosität der Faser dem Masseverlust der ausgelaugten Oxide.

Der Kern 3 besitzt dabei - wie bisher - die hochwertigen mechanischen Eigenschaften der Ausgangsfaser, beispielsweise E-Modul, Zugfestigkeit, etc. Dabei kann das Ausgangsmaterial, also die Precursor-Faser, sowie der während der Behandlung der Faser nicht modifizierte Kern 3 durchaus eine niedrige thermische Beständigkeit aufweisen. Jedoch wird der Kern 3 durch die Mantelschicht 7 geschützt. Diese Mantelschicht 7 weist eine höhere Temperaturbeständigkeit aufgrund der Behandlung auf. Somit weist auch die gesamte modifizierte Faserstruktur 1 eine höhere Temperaturbeständigkeit auf als der Kern 3, also auch als die Ausgangsfaser. Die thermische Beständigkeit und die mechanischen Eigenschaften sind abhängig vom Verhältnis der Manteldicke und dem Kerndurchmesser.

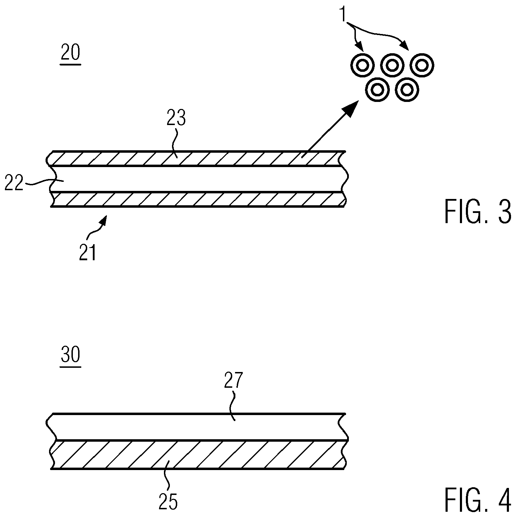

Diese Kern-Mantelstruktur kann auch auf Faservliesverbünde erweitert werden, wie in den Figuren 3 und 4 dargestellt. Wie bereits angedeutet, erfolgt die Behandlung von Faservliesschichten analog der Behandlung von einzelnen Fasern. Dabei werden die einzelnen Fasern zunächst zur Faservliesschicht/Vliesmatte vernadelt, bevor dann die gesamte, Faservliesschicht in eine definierte Säurelösung bei definierten Behandlungsparametern eingetaucht wird.

Fig. 3 zeigt eine Sandwichstruktur 20 mit einer ersten temperaturstabilen äußeren Faservliesschicht aus zweikomponentigen, behandelten Fasern 21 und einer zweiten temperaturstabilen äußeren Faservliesschicht zweikomponentigen, behandelten Fasern 23. Typischerweise sind die beiden Faservliesschichten 21 und 23 gleich und entsprechend jeweils aus gleichen zweikomponentigen, behandelten Fasern aufgebaut, wie sie anhand der Fig. 1 und 2 erläutert sind. In einer Vergrößerung, die lediglich zur Erläuterung dienen soll, sind auf der rechten Seite der Fig. 3 Fasern 1, die bereits anhand von Fig. 1 und 2 diskutiert wurden, nebeneinander dargestellt, um eine Vliesmatte anzudeuten. Entsprechend kann die Faservliesschicht 23 und ebenso die Faservliesschicht 21 aus Fig. 3 einer Vliesmatte aus Fasern 1 entsprechen. In dem in Fig. 3 beispielhaft skizzierten Aufbau umschließen die beiden Faservliesschichten 21 und 23 unmittelbar eine weitere Faservliesschicht 22, die allerdings unbehandelte Fasern, also nur eine Komponente, umfasst. Die Innenschicht 22 ist beispielsweise im Wesentlichen aus unbehandeltem E-Glas. Diese Innenschicht 22 kann beispielsweise eine Temperaturstabilität von maximal 600 bis 700 °C aufweisen. Hingegen haben die beiden Faservliesschichten 21 und 23, die jeweils aus den behandelten zweikomponentigen Fasern sind, eine höhere Temperaturstabilität als die Innenschicht 22. Diese kann typischerweise 700-1000 °C betragen. Somit kann durch die Außenschichten 21 und 23 der in Fig. 3 gezeigten Sandwichstruktur eine höhere Temperaturstabilität bereitgestellt werden. Gleichzeitig behält die Struktur die guten mechanischen Festigkeitseigenschaften der Fasern der Innenschicht 22. Die Dicken der Schichten 21 und 23 können nach Auslaugdauer und Rohfaserdurchmesser gewählt werden. Sie können typischerweise gleich sein. Es versteht sich, dass es ebenso möglich ist, die Innenschicht 22 mit einer Dicke bereitzustellen, die von der der Außenschichten deutlich verschieden ist.

Häufig treten Anwendungen im Isolationsbereich auf, bei denen die Temperaturbelastung im Wesentlichen nur auf einer Seite einer Isolationsstruktur auftritt. Bei einer derartigen "einseitigen" Temperaturbelastung ist es ebenso möglich, wie in Fig. 4 dargestellt, nur die Hälfte des Vliesproduktes, also der Isolationsstruktur, mit einer Temperaturstabilität von 700-1000 °C auszustatten und den Rest unbehandelt zu lassen. In Fig. 4 ist eine Isolationsstruktur/Vliesprodukt 30 dargestellt, das zwei Schichten umfasst. Dabei handelt es sich um eine Faservliesschicht 25 aus behandelten Fasern und eine davon verschiedene unbehandelte Faservliesschicht 27. Analog zu Fig. 3 ist die zweikomponentige Faservliesschicht 25 aus zweikomponentigen, behandelten Fasern aufgebaut, wie sie anhand der Fig. 1 und 2 erläutert sind. Die Faservliesschicht 25 entspricht dabei typischerweise auch den Faservliesschichten 21 und 23 aus Fig. 3. Die Faservliesschicht 25 kann also eine Temperaturstabilität von 700- 1000 °C aufweisen. Wie in Fig. 4 dargestellt, ist über der Faservliesschicht 25 eine Faservliesschicht 27 angeordnet, ähnlich einer in Längsrichtung durchgeschnittenen Sandwichstruktur aus Fig. 3. Die Faservliesschicht 27 kann die gleichen Temperatureigenschaften haben wie die Faservliesschicht 22 aus Fig. 3. Es versteht sich also, dass die Seite der Struktur 30, die die zweikomponentige, behandelte Faservliesschicht 25 umfasst, einem zu isolierenden Gegenstand zugewandt wird, während die Seite der Struktur 30, die die Faservliessicht 27 aus unbehandelten Fasern aufweist, einem zu isolierenden Gegenstand abgewandt wird.

Die durch die Erfindung bereitgestellten, oberflächenmodifizierten Fasern bzw. Faservliesschichten eignen sich besonders für Wärmeisolation im Hochtemperaturbereich von etwa 700 °C bis 1000 °C, je nach Anwendungsintensität, wobei definierte Zugkräfte und definierte Elastizitätsmodule benötigt werden oder eine allgemein höhere Festigkeit, bzw. Stabilität der Faserprodukte. Potentielle Anwendungen können im Hochtemperaturbereich gesehen werden, insbesondere im Bereich der Automobilindustrie, der Luft- und Raumfahrtindustrie, dem Strömungsmaschinenbau, sowie spezielle Anforderungen im Bereich thermoakustischer Systeme. Gängige Dieselanwendungen in der Automobilindustrie bewegen sich im Temperaturbereich von 800-900 °C. ECR-Glasfasern mit einer Temperaturbeständigkeit von 750 °C sind für diesen Anwendungsfall unterdimensioniert und Silikatfasern mit einer Temperaturbeständigkeit von 1000 °C überdimensioniert und zu teuer. Hier bietet das in der Erfindung beschriebene Produkt eine optimale Lösung an. Außerdem bietet es den Vorteil, hochtemperaturstabile Fasern und Produkte bereitstellen zu können, ohne gleichzeitig Hersteller von Fasern, insbesondere Glasfasern sein zu müssen.

## Patentansprüche

1. Oberflächenmodifizierte Glasfaser, umfassend:
einen Kern aus einem ersten Glasfasermaterial;
eine Oberflächenschicht, die den Kern mantelartig vollständig umschließt;
wobei die Oberflächenschicht im Vergleich zum Kern einen höheren Siliziumdioxid-Anteil und eine höhere Porosität aufweist.

2. Oberflächenmodifizierte Glasfaser gemäß Anspruch 1, wobei das erste Glasfasermaterial des Kerns E-Glas, Wasserglas oder A-Glas umfasst.

3. Oberflächenmodifizierte Glasfaser gemäß Anspruch 1 oder 2, wobei der Kern einen Siliziumdioxid-Anteil von mindestens 52 % aufweist

4. Oberflächenmodifizierte Glasfaser gemäß wenigstens einem der Ansprüche 1 - 3, wobei die Oberflächenschicht einen Siliziumdioxid-Anteil von maximal 96% aufweist.

5. Oberflächenmodifizierte Glasfaser gemäß wenigstens einem der Ansprüche 1 - 3, wobei der Kern einen Kerndurchmesser von mindestens 0,5 µm aufweist und die Oberflächenschicht ebenfalls mindestens 0,5 µm dick ist.

6. Faservliesverbund umfassend:
eine erste Faservliesschicht aus oberflächenmodifizierten Glasfasern gemäß wenigstens einem der Ansprüche 1 - 5;
eine zweite Faservliesschicht aus einem zweiten Glasfasermaterial;
wobei die zweite Faservliesschicht über die erste Faservliesschicht geschichtet ist;
wobei das zweite Glasfasermaterial E-Glas, Wasserglas oder A-Glas umfasst.

7. Faservliesverbund gemäß Anspruch 6, ferner umfassend
eine dritte Faservliesschicht, wobei die dritte Faservliesschicht gleich der zweiten Faservliesschicht ist; wobei die zweite und die dritte Faservliesschicht die erste Faservliesschicht sandwichartig umschließen.

8. Verfahren zur Herstellung einer oberflächenmodifizierten Glasfaserstruktur, wobei die Glasfaserstruktur eine Precursor-Faser oder ein Faservliesschicht aus vernadelten Precursorfasern ist, wobei die Glasfaserstruktur aus einem ersten Glasfasermaterial ist, das E-Glas, Wasserglas oder A-Glas umfasst, umfassend die Schritte:
Auslaugen der Glasfaserstruktur durch Behandeln mit, insbesondere Eintauchen in, einer/eine vordefinierte/n Säurelösung für eine vorbestimmte Zeit bei einer vorbestimmten Raumtemperatur und bei einer vordefinierten Säurekonzentration.

9. Verfahren gemäß Anspruch 8, wobei die vordefinierte Säurelösung eine wässrige Lösung von Ameisensäure oder Salzsäure oder Schwefelsäure umfasst.

10. Verfahren gemäß Anspruch 8 oder 9, wobei die Temperatur der Säurelösung zwischen Raumtemperatur und 100 °C beträgt.

11. Verfahren gemäß wenigstens einem der Ansprüche 8 - 10, wobei die vorbestimmte Zeit 3 min - 3 h beträgt.

12. Verfahren gemäß wenigstens einem der Ansprüche 8 - 11, wobei die Säurekonzentration der Säurelösung zwischen 1 molar und 3 molar beträgt.

13. Verfahren zur Herstellung eines Faservliesverbundes umfassend
Herstellen einer ersten Faservliesschicht gemäß wenigstens einem der Ansprüche 8 - 12; und Aufbringen einer zweiten Faservliesschicht aus einem zweiten Glasfasermaterial auf die erste Faservliesschicht, wobei das zweite Glasfasermaterial E-Glas, Wasserglas oder A-Glas umfasst.

14. Verfahren zur Herstellung eines Faservliesverbundes gemäß Anspruch 13, ferner umfassend Aufbringen einer dritten Faservliesschicht auf die erste Faservliesschicht derart, dass die zweite Faservliesschicht und die dritte Faservliesschicht die erste Faservliesschicht sandwichartig umschließen, wobei die dritte Faservliesschicht gleich der zweiten Faservliesschicht ist.

15. Oberflächenmodifizierte Glasfaser hergestellt durch das Verfahren gemäß wenigstens einem der Ansprüche 8 - 12.
